# EUROPEAN PATENT APPLICATION

(11) **EP 4 528 757 A1**
(43) Date of publication of application: **26.03.2025**
(21) Application number: 23807433.0
(22) Date of filing: 01.05.2023
(51) Int. Cl.: H01F 1/24, B22F 1/00, B22F 1/16, B22F 3/00, C22C 38/00, H01F 27/255

(54) **INSULATED COVERED SOFT MAGNETIC METAL POWDER, MAGNETIC DUST CORE, ELECTRONIC ELEMENT, ELECTRONIC DEVICE, ELECTRIC MOTOR AND POWER GENERATOR**

(30) Priority: 18.05.2022 JP 2022081309
(71) Applicant: Niterra Co., Ltd., Nagoya-shi, Aichi 461-0005 (JP)
(72) Inventor: ITO, Yoichi, Nagoya-shi, Aichi 461-0005 (JP); SHIOTSU, Kenichi, Nagoya-shi, Aichi 461-0005 (JP); KOZUKA, Hisashi, Nagoya-shi, Aichi 461-0005 (JP)
(74) Representative: Grünecker Patent- und Rechtsanwälte PartG mbB
(86) International application number: PCT/JP2023/017052
(87) International publication number: WO 2023/223826

(57) **Abstract**

An insulation-coated soft magnetic metal powder (1) includes: soft magnetic metal particles (2) having an average equivalent circle diameter of 10 µm to 100 µm; and an insulation layer (3) formed on a surface of each of the soft magnetic metal particles (2). The insulation layer (3) contains an oxide including Zr element. In the insulation-coated soft magnetic metal powder (1), when the oxide is measured at 25°C by XRD, a strongest peak is a cubic peak or a tetragonal peak, and an intensity of a monoclinic peak is not greater than one-tenth of an intensity of the strongest peak.

## Description

### TECHNICAL FIELD

The present disclosure relates to an insulation-coated soft magnetic metal powder, a dust core, an electronic element, an electronic device, an electric motor, and a generator.

### BACKGROUND ART

Patent Document 1 discloses ferromagnetic powder for a dust core in which 0.1 to 10 vol% of a ZrO₂ sol is added to an atomized iron powder. In addition, Patent Document 2 describes an insulation-coated soft magnetic metal powder in which zirconium oxide is used.

### PRIOR ART DOCUMENT

### PATENT DOCUMENT

Patent Document 1: Japanese Patent Application Laid-Open (kokai) No. H10-335128
Patent Document 2: Japanese Patent Application Laid-Open (kokai) No. 2019-192868

### SUMMARY OF THE INVENTION

### PROBLEM TO BE SOLVED BY THE INVENTION

In an insulation-coated soft magnetic metal powder, loss reduction has been attempted by coating a soft magnetic metal particle with an insulation layer. However, there has been a problem that insulation property decreases when the temperature is increased to a predetermined temperature or higher during the production of an insulation-coated soft magnetic metal powder.

The present disclosure has been made in view of the above circumstances. An object of the present disclosure is to achieve loss reduction of an insulation-coated soft magnetic metal powder. The present disclosure can be realized in the following form.

### MEANS FOR SOLVING THE PROBLEM

[1] An insulation-coated soft magnetic metal powder including:
   soft magnetic metal particles having an average equivalent circle diameter of 10 µm to 100 µm; and
   an insulation layer formed on a surface of each of the soft magnetic metal particles, wherein
   the insulation layer contains an oxide including Zr element; and
   when the oxide is measured at 25°C by XRD,
   a strongest peak is a cubic peak or a tetragonal peak, and
   an intensity of a monoclinic peak is not greater than one-tenth of an intensity of the strongest peak.

### ADVANTAGEOUS EFFECTS OF THE INVENTION

According to the present disclosure, loss reduction of the insulation-coated soft magnetic metal powder can be achieved.

### BRIEF DESCRIPTION OF THE DRAWINGS

[Fig. 1] Cross-sectional view schematically showing a cross section of a dust core.
[Fig. 2] Equilibrium diagram of Y₂O₃-ZrO₂.
[Fig. 3] Equilibrium diagram of CaO-ZrO₂.
[Fig. 4] Diagram showing results of measurements of oxides of Example 1 and Comparative Example 1 by XRD.
[Fig. 5] Schematic diagram of an inductor in which the dust core is used.
[Fig. 6] Schematic diagram of an inductor in which the dust core is used.
[Fig. 7] Schematic diagram of an inductor in which the dust core is used.
[Fig. 8] Schematic diagram of a noise filter in which the dust core is used.
[Fig. 9] Schematic diagram of a reactor in which the dust core is used.
[Fig. 10] Schematic diagram of a transformer in which the dust core is used.
[Fig. 11] Circuit diagram of a noise filter in which the dust core is used.
[Fig. 12] Schematic diagram of a motor in which the dust core is used.
[Fig. 13] Schematic diagram of a generator in which the dust core is used.

### MODES FOR CARRYING OUT THE INVENTION

Here, desirable examples of the present disclosure are shown.
[2] The insulation-coated soft magnetic metal powder according to [1], wherein the oxide is stabilized zirconia or partially stabilized zirconia.
[3] A dust core including the insulation-coated soft magnetic metal powder according to [1] or [2].
[4] An electronic element including the dust core according to [3].
[5] The electronic element according to [4], including the dust core and a coil.
[6] An electronic device including the electronic element according to [4].
[7] An electric motor including the dust core according to [3].
[8] A generator including the dust core according to [3].

Hereinafter, the present disclosure will be described in detail. In the description herein, when "to" is used to describe a numerical value range, the lower limit value and the upper limit value are included unless otherwise specified. For example, when "10 to 20" is described, "10" as the lower limit value and "20" as the upper limit value are both included. That is, "10 to 20" is equivalent to "10 or more and 20 or less".

### 1. Insulation-coated soft magnetic metal powder 1

An insulation-coated soft magnetic metal powder 1 includes: soft magnetic metal particles 2 having an average equivalent circle diameter of 10 µm to 100 µm; and an insulation layer 3 formed on a surface of each of the soft magnetic metal particles 2. The insulation layer 3 contains an oxide including Zr element. With respect to the insulation-coated soft magnetic metal powder 1, when the oxide is measured at 25°C by XRD (X-ray diffraction), the strongest peak is a cubic peak or a tetragonal peak, and the intensity of a monoclinic peak is not greater than one-tenth of the intensity of the strongest peak.

### (1) Soft magnetic metal particles 2

The soft magnetic metal particles 2 are not limited in particular as long as they are metal particles being soft magnetic, and a wide range of such metal particles can be used. As the soft magnetic metal particles 2, a wide range of particles, such as those of pure iron and those of an iron-based alloy that are soft magnetic, can be used. As the iron-based alloy, an Fe-Si alloy, an Fe-Si-Cr alloy, an Fe-Si-Al alloy (sendust), an Ni-Fe alloy (permalloy), an Ni-Fe-Mo alloy (supermalloy), an Fe-based amorphous alloy, an Fe-Co alloy, or the like can be appropriately used. Among these, an Fe-Si alloy, an Fe-Si-Cr alloy, an Fe-Si-Al alloy (sendust), an Ni-Fe alloy (permalloy), and an Ni-Fe-Mo alloy (supermalloy) are preferable from the viewpoint of magnetic permeability, coercive force, and frequency characteristics.

When an Fe-Si alloy is used, an alloy having a composition composed of, for example, 0.1 mass% to 10 mass% of Si, and Fe and inevitable impurities as the remainder, can be used.

When an Fe-Si-Cr alloy is used, an alloy having a composition composed of, for example, 0.1 mass% to 10 mass% of Si, 10 mass% to 20 mass% of Cr, and Fe and inevitable impurities as the remainder, can be used.

The average equivalent circle diameter of the soft magnetic metal particles 2 is 10 µm or more and 100 µm or less, preferably 25 µm or more and 100 µm or less, and more preferably 50 µm or more and 100 m or less. The average equivalent circle diameter of the soft magnetic metal particles 2 can be changed as appropriate depending on the frequency band that is used. In particular, when it is assumed to be used in a high frequency band exceeding 100 kHz, the average equivalent circle diameter is more preferably 10 µm or more and 25 µm or less.

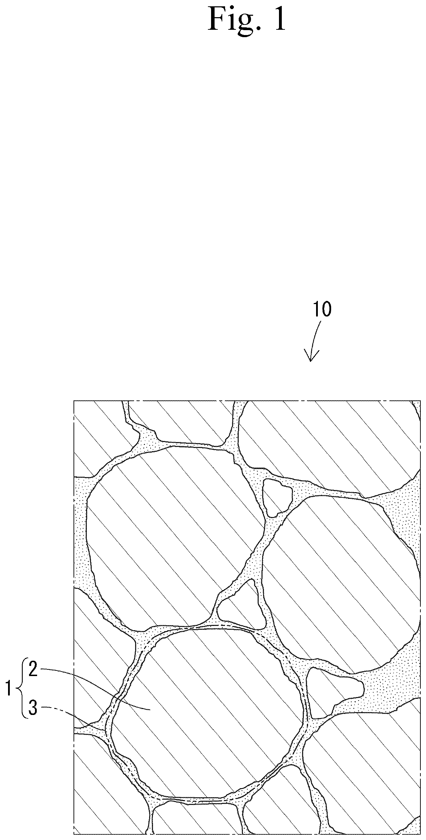

The average equivalent circle diameter of the soft magnetic metal particles 2 can be obtained by calculating an area-equivalent circle diameter from each particle area obtained through observation of a cross section by an FE-SEM. For example, in a case of a dust core 10, the dust core 10 including the insulation-coated soft magnetic metal powder 1 is molded, and a cross section of the dust core 10 is observed to obtain the average equivalent circle diameter (see Fig. 1). Specifically, an area-equivalent circle diameter is calculated from each particle area obtained through observation of a cross section of the dust core 10 by an FE-SEM, and the area-equivalent circle diameter is used for the average equivalent circle diameter. More specifically, the average equivalent circle diameter is obtained as follows. In a predetermined observation field of view (e.g., 200 µm × 200 µm), multiple soft magnetic metal particles 2 that can be observed without missing parts are focused on. The diameter of an ideal circle (perfect circle) having an area equal to the area (projected area) of each particle image of the soft magnetic metal particles 2 (area-equivalent circle diameter) is calculated as an equivalent circle diameter of each particle. Then, the respective equivalent circle diameters of the particles are arithmetically averaged, whereby the average equivalent circle diameter is obtained. The equivalent circle diameter of each particle and the average equivalent circle diameter can be obtained by using general image analysis software.

### (2) Insulation layer 3

The insulation layer 3 contains an oxide including Zr (zirconium) element. When the insulation layer 3 is observed by a TEM (transmission electron microscope), particles forming the insulation layer 3 are confirmed. At least a part of the particles is formed by a crystal of the above oxide.

The average equivalent circle diameter of the particles forming the insulation layer 3 is not limited in particular. From the viewpoint of reducing eddy current loss, the average equivalent circle diameter of the particles forming the insulation layer 3 is preferably 20 nm or more and 50 nm or less. The average equivalent circle diameter of the particles forming the insulation layer 3 can be controlled by adjusting the particle diameter of the raw material of the insulation layer 3.

The average equivalent circle diameter of the particles forming the insulation layer 3 can be obtained by calculating an area-equivalent circle diameter from each particle area obtained through observation of a cross section by a TEM. For example, in a case of the dust core 10, the dust core 10 including the insulation-coated soft magnetic metal powder 1 is molded, and a cross section of the dust core 10 is observed to obtain the average equivalent circle diameter. Specifically, an area-equivalent circle diameter is calculated from each particle area obtained through observation of a cross section of the dust core 10 by a TEM, and the area-equivalent circle diameter is used for the average equivalent circle diameter. More specifically, the average equivalent circle diameter is obtained as follows. In observation fields of view of five squares each being 300 nm × 300 nm, multiple particles that can be observed without missing parts are focused on. The diameter of an ideal circle (perfect circle) having an area equal to the area (projected area) of each particle image (area-equivalent circle diameter) is calculated as an equivalent circle diameter of each particle. Then, the respective equivalent circle diameters of the particles are arithmetically averaged, whereby the average equivalent circle diameter is obtained. The equivalent circle diameter of each particle and the average equivalent circle diameter can be obtained by using general image analysis software.

The above oxide is preferably stabilized zirconia or partially stabilized zirconia from the viewpoint of appropriate loss reduction of the insulation-coated soft magnetic metal powder 1. Stabilized zirconia is zirconia obtained by solid-solving a stabilizer in ZrO₂ (zirconia) such that cubic crystals are stably present at room temperature (25°C). Stabilized zirconia can have a cubic fluorite structure. Partially stabilized zirconia is zirconia obtained by solid-solving a stabilizer by a smaller amount than that for stabilized zirconia in ZrO₂, and in general, cubic crystals and tetragonal crystals are present in a dispersed manner at room temperature.

Examples of the stabilizer include at least one type of an oxide of Y (yttrium), Ca (calcium), Mg (magnesium), and other rare earth elements. Examples of the other rare earth elements include La (lanthanum), Ce (cerium), Nd (neodymium), Sm (samarium), Gd (gadolinium), Dy (dysprosium), Er (erbium), and Yb (ytterbium).

The above oxide is preferably stabilized zirconia or partially stabilized zirconia that contains yttria (Y₂O₃). When producing stabilized zirconia or partially stabilized zirconia, Ca is heated to 1100°C or higher and then reacted with ZrO₂, or Mg is heated to 1300°C or higher and then reacted with ZrO₂. Meanwhile, Y reacts with ZrO₂ even at 1000°C or lower, and thus, stabilized zirconia or partially stabilized zirconia that contains yttria can be easily and inexpensively produced. In addition, Y is inexpensive as compared with the other rare earth elements and is advantageous in terms of cost.

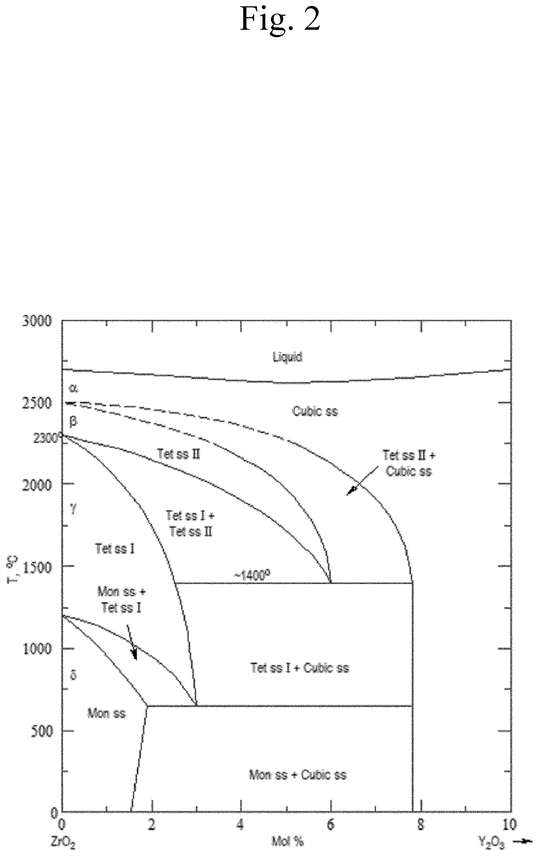

Fig. 2 is an equilibrium diagram of Y₂O₃-ZrO₂ cited from "Fig.Zr-150" of "AcerS - NIST Phase Equilibria Diagrams", which is a database of equilibrium diagrams. In Fig. 2, "Tet ss I" represents a lower temperature tetragonal polymorph, "Tet ss II" represents a higher temperature tetragonal polymorph, and "Mon ss" represents a monoclinic polymorph.

From the viewpoint of inhibiting generation of monoclinic ZrO₂, the amount of yttria in stabilized zirconia or partially stabilized zirconia is preferably 2 mol% or more, and more preferably 7 mol% or more. From the viewpoint of inhibiting generation of a Zr₃Y₄O₁₂ phase, the amount of yttria in stabilized zirconia or partially stabilized zirconia is preferably 20 mol% or more. From these viewpoints, the amount of yttria in stabilized zirconia or partially stabilized zirconia is preferably 2 mol% or more and 20 mol% or less, and more preferably 7 mol% or more and 20 mol% or less. The amount of yttria in stabilized zirconia or partially stabilized zirconia may be 15 mol% or less, may be 12 mol% or less, or may be 10 mol% or less.

The above oxide may be stabilized zirconia or partially stabilized zirconia that contains calcia (CaO).

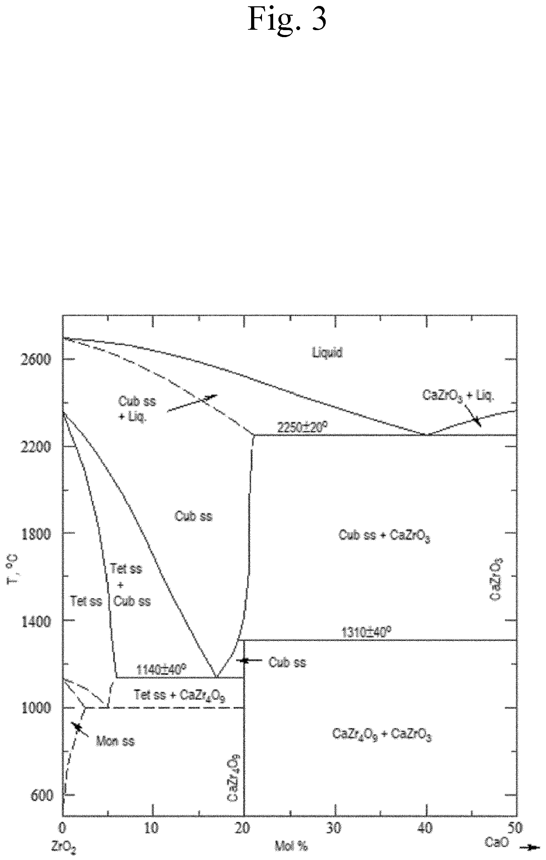

Fig. 3 is an equilibrium diagram of CaO-ZrO₂ cited from "Fig.Zr-058" of "AcerS - NIST Phase Equilibria Diagrams", which is a database of equilibrium diagrams. In Fig. 3, "Cub" represents cubic, "Mon" represents monoclinic, and "Tet" represents tetragonal.

From the viewpoint of inhibiting generation of monoclinic ZrO₂, the amount of calcia in stabilized zirconia or partially stabilized zirconia is preferably 3 mol% or more, more preferably 7 mol% or more, and further preferably 10 mol% or more. From the viewpoint of inhibiting generation of a CaZr₄O₉ phase or a CaZrO₃ phase, the amount of calcia in stabilized zirconia or partially stabilized zirconia is preferably 20 mol% or less. From these viewpoints, the amount of calcia in stabilized zirconia or partially stabilized zirconia is preferably 3 mol% or more and 20 mol% or less, and more preferably 7 mol% or more and 20 mol% or less.

The above oxide may be stabilized zirconia or partially stabilized zirconia that contains magnesia (MgO).

From the viewpoint of inhibiting generation of monoclinic ZrO₂, the amount of magnesia in stabilized zirconia or partially stabilized zirconia is preferably 4 mol% or more, more preferably 7 mol% or more, and further preferably 10 mol% or more. From the viewpoint of inhibiting generation of an MgO phase, the amount of magnesia in stabilized zirconia or partially stabilized zirconia is preferably 20 mol% or less. From these viewpoints, the amount of magnesia in stabilized zirconia or partially stabilized zirconia is preferably 4 mol% or more and 20 mol% or less, and more preferably 7 mol% or more and 20 mol% or less.

### (3) Requirements about intensity of monoclinic peak in oxide including Zr element

With respect to the insulation-coated soft magnetic metal powder 1, when the oxide is measured at 25°C by XRD, the strongest peak is a cubic peak or a tetragonal peak, and the intensity of a monoclinic peak is not greater than one-tenth of the intensity of the strongest peak. When multiple monoclinic peaks are observed, the peak having the highest intensity out of the multiple monoclinic peaks is specified as the monoclinic peak. When the strongest peak is a cubic peak or a tetragonal peak, and no monoclinic peak is observed, the intensity of the monoclinic peak is 0, and thus, is not greater than one-tenth of the intensity of the strongest peak.

A fact that the strongest peak is a cubic peak or a tetragonal peak, and the intensity of a monoclinic peak is not greater than one-tenth of the intensity of the strongest peak serves as one index indicating that, in the oxide, the amount of monoclinic ZrO₂ is small and a large amount of ZrO₂ is present as being cubic or tetragonal. In XRD, the peak of tetragonal ZrO₂ and the peak of cubic ZrO₂ overlap each other and are difficult to be separated from each other, and thus, a fact that the strongest peak is a cubic peak or tetragonal peak is set as one of the present requirements. From the viewpoint of reducing eddy current loss, ZrO₂ is preferably present as cubic ZrO₂. That is, it is preferable that, when the oxide is measured at 25°C by XRD, a peak of cubic ZrO₂ is detected.

The crystal phase showing the strongest peak of the oxide including Zr element can be controlled, for example, through addition of a stabilizer and the concentration of the stabilizer, adjustment of the particle diameter of the raw material of the insulation layer 3, adjustment of a heat treatment condition and the like in a production method described later, and the like.

The strongest peak of the oxide including Zr element can be obtained through XRD measurement of the dust core 10 including the insulation-coated soft magnetic metal powder 1. The XRD measurement is performed under the following conditions, for example.
· Apparatus: Rigaku SmartLab
· X-ray: CuKα₁
· Tube voltage: 40 kV
· Tube current: 30 mA
· Scan speed: 5°/min
· Sampling width: 0.02°
· Measurement range (2θ): 10° to 80°
· Entrance slit: 1/2°
· Light-receiving slit 1: 15.000 mm
· Light-receiving slit 2: 20.000 mm

In the diffraction pattern of the dust core 10 obtained in the XRD measurement, peaks derived from the soft magnetic metal particles 2, a measurement cell, etc., are excluded, and a peak derived from the oxide including Zr element is obtained. When the number of peaks derived from the oxide including Zr element is one, the peak is specified as the strongest peak. When there are multiple peaks derived from the oxide including Zr element, the peak having the highest intensity out of the multiple peaks is specified as the strongest peak.

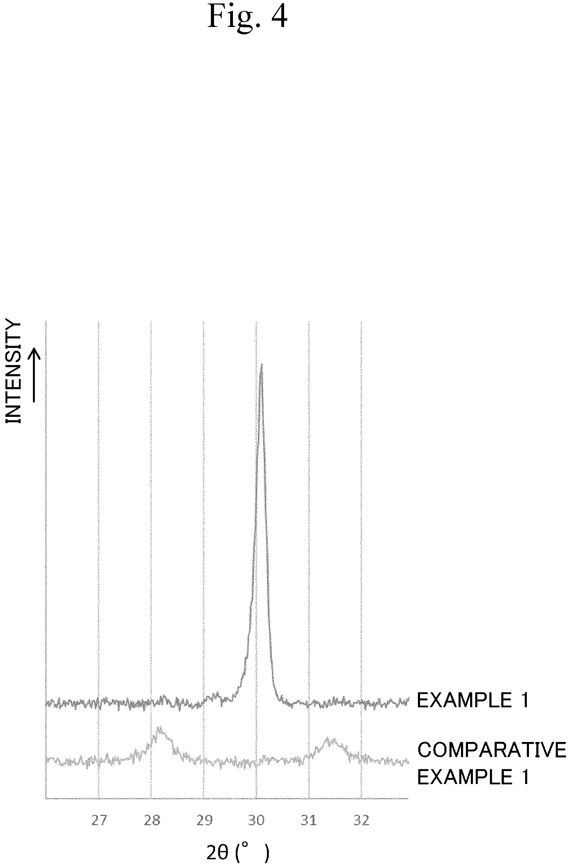

More specific description will be given below with reference to Fig. 4. The upper one in Fig. 4 is a diffraction pattern of an oxide of Example 1 described later. The strongest peak of the oxide of Example 1 is a peak of tetragonal ZrO₂ (1,0,1) or cubic ZrO₂ (1,1,1) that appears near 2θ≈30.1°. The lower one in Fig. 4 is a diffraction pattern of an oxide of Comparative Example 1 described later. The strongest peak of the oxide of Comparative Example 1 is a peak of monoclinic ZrO₂ (-1,1,1) that appears near 2θ≈28.2°. In Comparative Example 1, near 2θ≈31.4°, a peak of monoclinic ZrO₂ (1,1,1) is observed. Details of each peak are as follows.
· Monoclinic ZrO₂
   (hkl) of strongest peak: (-1,1,1)
   d value of strongest peak: 3.140 to 3.220
   2θ of strongest peak (λ=1.54059): 27.68° to 28.40°
· Tetragonal ZrO₂
   (hkl) of strongest peak: (1,0,1)
   d value of strongest peak: 2.930 to 3.000
   2θ of strongest peak (λ=1.54059): 29.76° to 30.48°
· Cubic ZrO₂
   (hkl) of strongest peak: (1,1,1)
   d value of strongest peak: 2.920 to 3.000
   2θ of strongest peak (λ=1.54059): 29.76° to 30.59°

### (4) Inferred reason for loss reduction of insulation-coated soft magnetic metal powder 1 (dust core 10)

In the present embodiment, the reason why loss can be reduced in the insulation-coated soft magnetic metal powder 1 (the dust core 10) is not certain, but can be inferred as follows.

Usually, pure ZrO₂ is present as being monoclinic at normal temperature. Monoclinic ZrO₂ undergoes phase transformation from monoclinic to tetragonal during increase in temperature, and at this time, undergoes 4% volume shrinkage. Conversely, during decrease in temperature, Monoclinic ZrO₂ undergoes volume expansion. In a case where a predetermined amount or more of monoclinic ZrO₂ is included as the oxide, shrinkage and expansion are caused when annealing, etc., are performed for the purpose of removing strain of metal (reducing hysteresis loss), and there is a concern that eddy current loss due to breakage of the insulation layer 3 caused by the shrinkage and the expansion may increase. The temperature at which this phase transformation occurs is 1170°C according to an equilibrium diagram. When ZrO₂ is nanoparticles, the temperature at which the phase transformation occurs is lowered, and the phase transformation may occur even at 750°C.

In the present embodiment, cubic ZrO₂ in a high temperature phase is stabilized even at room temperature through, for example, addition of a stabilizer (e.g., yttrium), so that annealing can be performed at a high temperature without causing the phase transformation of ZrO₂. As a result, it is inferred that, while increase in eddy current loss due to breakage of the insulation layer 3 is suppressed, hysteresis loss can be sufficiently reduced by annealing, and loss reduction of the insulation-coated soft magnetic metal powder 1 (the dust core 10) can be achieved.

### 2. Dust core 10.

The above insulation-coated soft magnetic metal powder 1 is useful as a material of a dust core. That is, the dust core 10 preferably includes the insulation-coated soft magnetic metal powder 1. In the description of the dust core 10, regarding similar points, the description of the insulation-coated soft magnetic metal powder 1 above will be referred to.

### 3. Production method for insulation-coated soft magnetic metal powder 1 and dust core 10.

The production method for the insulation-coated soft magnetic metal powder 1 and the dust core 10 is not limited in particular. An example is described below.

### (1) Preparation of the insulation-coated soft magnetic metal powder 1

A suspension including zirconia particles, yttrium acetate, and a small amount of an organic component is mixed with a soft magnetic metal powder, and the mixture is dried. The soft magnetic metal powder is not limited in particular as long as it is metal particles being soft magnetic, and a wide range of such metal particles can be used. The source of yttrium may be an oxide of yttrium or a nitrate other than yttrium acetate. The obtained dry powder is subjected to heat treatment to obtain the insulation-coated soft magnetic metal powder 1. The condition for this heat treatment is not limited in particular. As the heat treatment condition, for example, conditions of heat treatment temperature of 750°C to 1200°C and an inert atmosphere (N₂ atmosphere, Ar atmosphere) are appropriately adopted.

### (2) Molding (press molding)

The insulation-coated soft magnetic metal powder 1 is put in a mold and subjected to press molding at a molding pressure of 1.0 GPa to 1.7 GPa, to obtain a molded body.

### (3) Heat treatment (annealing)

The obtained molded body is subjected to heat treatment (annealing) to obtain the dust core 10. As the heat treatment condition, for example, conditions of: heat treatment temperature of 600°C to 1200°C; a temperature increase rate at 350°C to 600°C of 3°C/min or more; a holding time of 10 minutes to 120 minutes; and an inert atmosphere (N₂ atmosphere, Ar atmosphere) are appropriately adopted.

The heat treatment condition is changed as appropriate according to the types of the soft magnetic metal powder and the oxide that are used.

### 4. Application example of dust core

The dust core 10 above is suitably used in an electronic element. Examples of the electronic element include an inductor, a choking coil, a noise filter, a reactor, and a transformer. The electronic element includes the dust core 10 and a coil, for example.

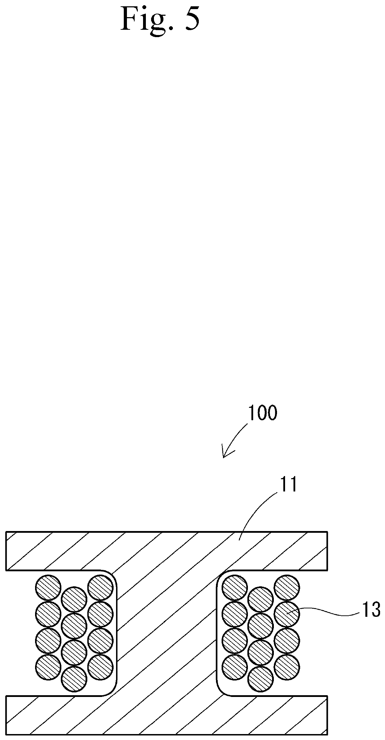

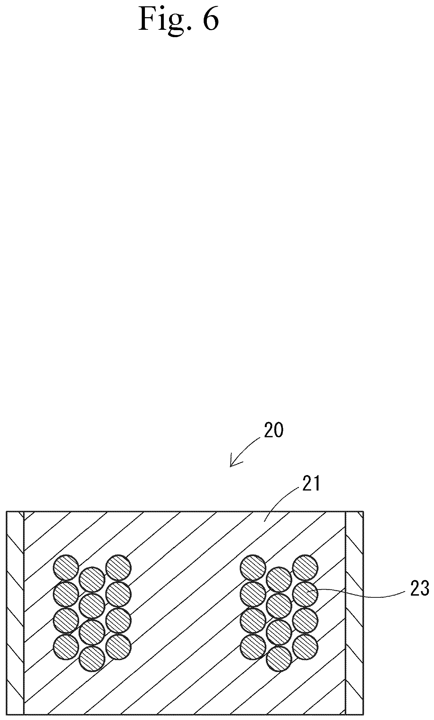

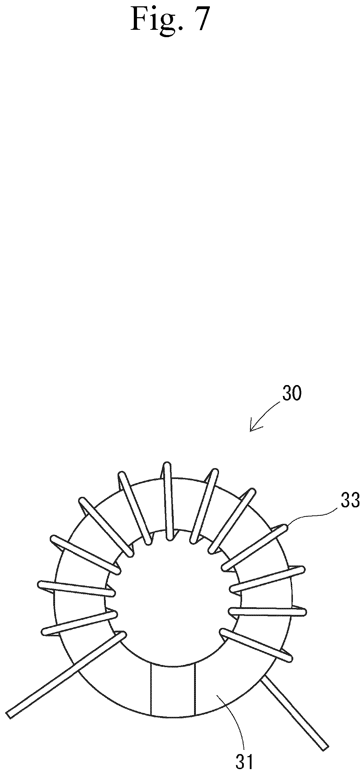

Inductors 100, 20, 30 shown in Fig. 5 to Fig. 7 are examples of the electronic element of the present disclosure. The inductor 100 shown in Fig. 5 includes a dust core 11 and a coil 13. The inductor 20 shown in Fig. 6 includes a dust core 21 and a coil 23. The inductor 30 shown in Fig. 7 includes a dust core 31 and a coil 33. The dust cores 11, 21, 31 have a configuration similar to that of the dust core 10.

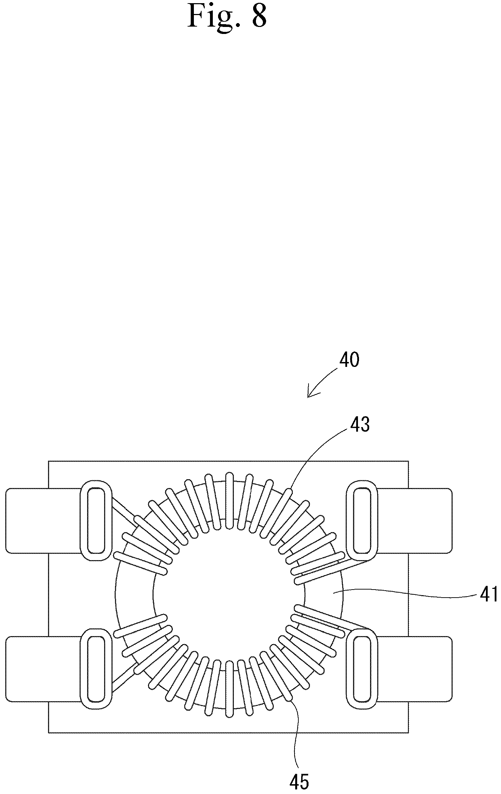

A noise filter 40 shown in Fig. 8 is an example of the electronic element of the present disclosure. The noise filter 40 includes a dust core 41 and a pair of coils 43, 45. The dust core 41 has a configuration similar to that of the dust core 10.

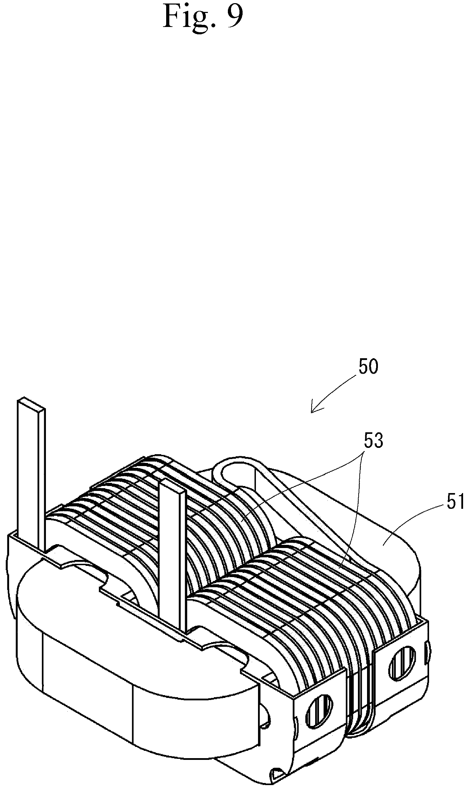

A reactor 50 shown in Fig. 9 is an example of the electronic element of the present disclosure. The reactor 50 includes a dust core 51 and a coil 53. The dust core 51 has a configuration similar to that of the dust core 10.

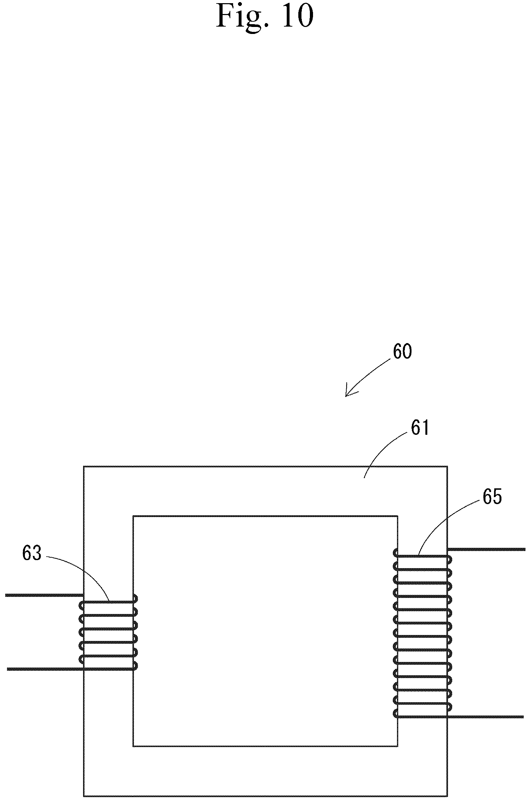

A transformer 60 shown in Fig. 10 is an example of the electronic element of the present disclosure. The transformer 60 includes a dust core 61 and a pair of coils 63, 65. The dust core 61 has a configuration similar to that of the dust core 10 above.

The dust core 10 above is suitably used in an electronic device. The electronic device includes an electronic element. Examples of the electronic element include the electronic elements described above.

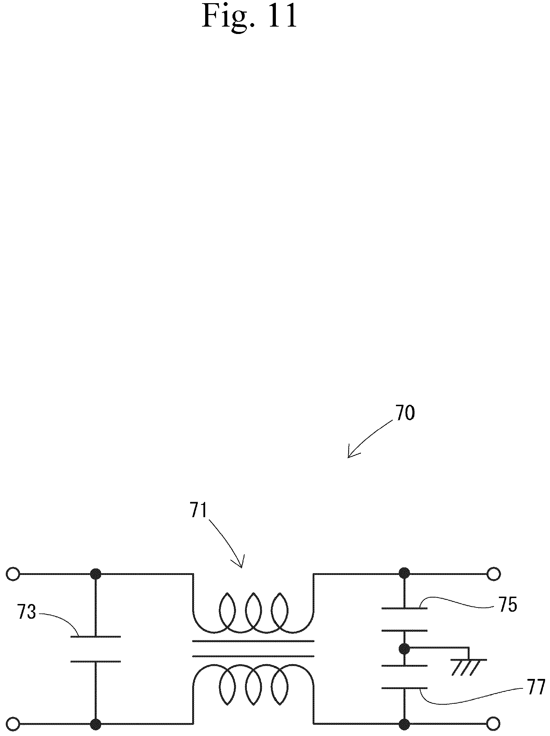

A noise filter 70 shown in Fig. 11 is an example of the electronic device of the present disclosure. The noise filter 70 includes an element 71 and capacitors 73, 75, 77. The element 71 corresponds to an example of an "electronic element" of the present disclosure. The element 71 is an element having a configuration similar to that of the noise filter 40 shown in Fig. 8, for example.

The dust core 10 above is suitably used in an electric motor. Examples of the electric motor include a motor, a linear actuator, and the like.

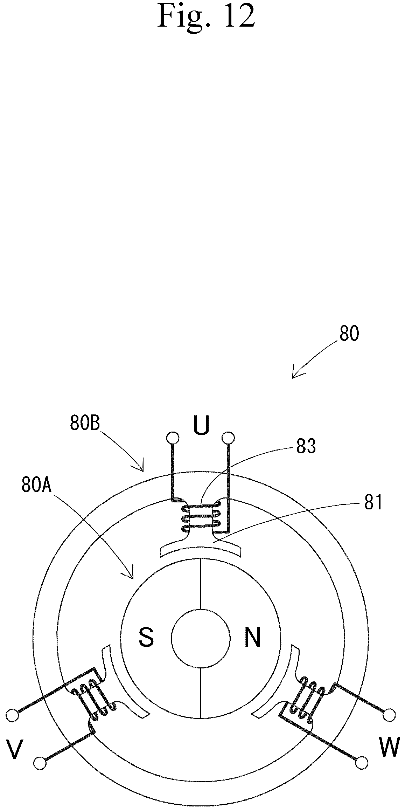

A motor 80 shown in Fig. 12 is an example of an electric motor of the present disclosure. The motor 80 includes a rotor 80A and a stator 80B. The stator 80B has a dust core 81 and a coil 83. The dust core 81 has a configuration similar to that of the dust core 10 above.

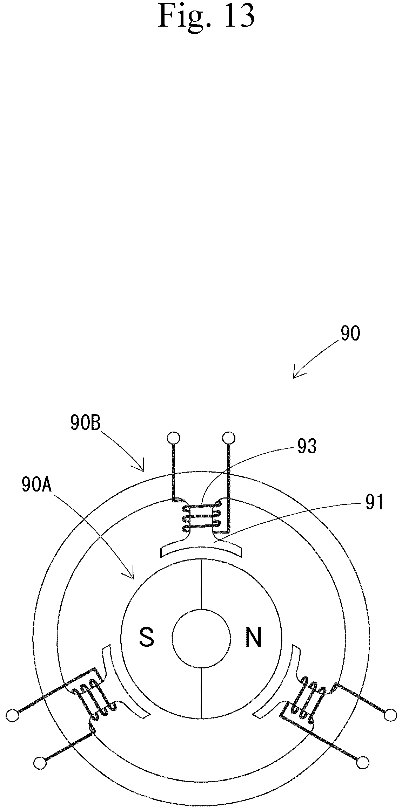

A generator 90 shown in Fig. 13 is an example of a generator of the present disclosure. The generator 90 includes a rotor 90A and a stator 90B. The stator 90B has a dust core 91 and a coil 93. The dust core 91 has a configuration similar to that of the dust core 10 above.

### [Example]

Hereinafter, the present disclosure will be further specifically described with reference to Examples.

### 1. Production of dust core

### (1) Example 1

A suspension including zirconia particles, yttrium acetate, a small amount of an organic component, and a solvent was mixed with pure iron particles, and the mixture was dried and subjected to heat treatment. The concentration of oxide particles in the suspension was set to 0.1 mass% to 2 mass% with respect to the entire suspension. The amount of the suspension that was mixed with soft magnetic metal particles was set such that the entire amount of the contained oxide particles was 6 volume% with respect to the soft magnetic metal particles. The amount of yttrium acetate was set such that Zr element was 84 mol% and Y element was 16 mol% (8 mol% in terms of Y₂O₃). The conditions of the heat treatment (first heat treatment) were a heat treatment temperature of 900°C and in nitrogen. The heat treatment was performed for the purpose of removing the organic component in the insulation layer and advancing solid solution reaction of the oxide. In this manner, an insulation-coated soft magnetic metal powder of Example 1 was obtained.

The obtained insulation-coated soft magnetic metal powder was put in a mold and subjected to press molding at a molding pressure of 1.7 GPa, whereby a press molded body having a diameter of 10 mm or a toroidal shape (outer diameter: 8 mm, inner diameter: 4.5 mm, height: 1.5 mm) was obtained. This molded body was subjected to heat treatment (second heat treatment). The conditions of the heat treatment were a heat treatment temperature of 600°C to 1200°C, a temperature increase rate in a range of 350°C to 600°C of 3°C/min to 10°C/min, and in nitrogen. In this manner, a dust core of Example 1 was obtained.

### (2) Example 2

A dust core of Example 2 was obtained in the same manner as that in Example 1 except that Fe-3.5 mass% Si alloy particles were used instead of the pure iron particles.

### (3) Comparative Example 1

A dust core of Comparative Example 1 was obtained in the same manner as that in Example 1 except that yttrium acetate was not added.

### (4) Comparative Example 2

A dust core of Comparative Example 2 was obtained in the same manner as that in Example 2 except that yttrium acetate was not added.

Table 1 collectively shows characteristics of the soft magnetic metal particles, the insulation layer, and the eddy current loss of Examples and Comparative Examples.

The column of "Crystal phase of strongest peak" indicates the crystal phase of the strongest peak specified by the method described in the embodiment.

In the column of "Intensity of monoclinic peak relative to intensity of strongest peak", evaluation was performed, with respect to the intensity of the strongest peak and the intensity of the monoclinic peak specified by the method described in the embodiment, according to the criteria below. When the crystal phase of the intensity of the strongest peak is monoclinic, the intensity of the monoclinic peak and the intensity of the strongest peak are the same, and thus, the intensity of the monoclinic peak relative to the intensity of the strongest peak is 1.

Not greater than 1/10: the intensity of the monoclinic peak is not greater than one-tenth of the intensity of the strongest peak.

Greater than 1/10: the intensity of the monoclinic peak is greater than one-tenth of the intensity of the strongest peak.

In the column of "Satisfaction of requirement about intensity of monoclinic peak", evaluation was performed according to the criteria below.

Satisfied: "Crystal phase of strongest peak" is cubic or tetragonal, and "Intensity of monoclinic peak relative to intensity of strongest peak" is not greater than 1/10.

Not satisfied: "Crystal phase of strongest peak" is not cubic or tetragonal, or "Intensity of monoclinic peak relative to intensity of strongest peak" is greater than 1/10.

**[Table 1]**

| | Soft magnetic metal particle | Insulation layer | | | Eddy current loss (kW/m³) |
|---|---|---|---|---|---|
| | Composition | Crystal phase of strongest peak | Intensity of monoclinic peak relative to intensity of strongest peak | Satisfaction of requirement about intensity of monoclinic peak | |
| Example 1 | Fe | Cubic or tetragonal | Not greater than 1/10 | Satisfied | 14.4 |
| Example 2 | Fe-3.5% Si | Cubic or tetragonal | Not greater than 1/10 | Satisfied | 5.3 |
| Comparative Example 1 | Fe | Monoclinic | Greater than 1/10 | Not satisfied | 537.4 |
| Comparative Example 2 | Fe-3.5% Si | Monoclinic | Greater than 1/10 | Not satisfied | 109.0 |

### 2. Evaluation method for eddy current loss

Eddy current loss (kW/m³) of the obtained dust core was measured under conditions of a frequency of 10 kHz and a magnetic flux density of 0.1 T. The measurement results are also shown in Table 1.

### 3. Result

Examples 1, 2 satisfy requirements (a), (b), (c), (d) below.
· Requirement (a): soft magnetic metal particles having an average equivalent circle diameter of 10 µm to 100 µm are included.
· Requirement (b): an insulation layer formed on a surface of each of the soft magnetic metal particles is included.

· Requirement (c): the insulation layer contains an oxide including Zr element.
· Requirement (d): when the oxide is measured at 25°C by XRD, the strongest peak is a cubic peak or a tetragonal peak, and the intensity of a monoclinic peak is not greater than one-tenth of the intensity of the strongest peak.

In contrast to this, Comparative Examples 1, 2 do not satisfy requirement (d).

Examples 1, 2 had low eddy current losses as compared with those of Comparative Examples 1, 2.

Example 1, in which the composition of the soft magnetic metal particles was pure iron, had a low eddy current loss as compared with that of Comparative Example 1 having the same composition. Example 2, in which the composition of the soft magnetic metal particles was an Fe-3.5 mass% Si alloy, had a low eddy current loss as compared with that of Comparative Example 2 having the same composition. From these results, it was suggested that the composition of the soft magnetic metal particles is not limited in particular and that a wide range of the soft magnetic metal particles is applicable.

### 4. Effects of Examples

According to the present embodiment, loss reduction of the insulation-coated soft magnetic metal powder can be achieved.

The present disclosure is not limited to the embodiment described above in detail, and various modifications or variations can be made without departing from the scope of the claims.

### INDUSTRIAL APPLICABILITY

The dust core of the present disclosure is particularly suitably used for usages as a motor, a transformer, a reactor, an inductor, a noise filter, and the like.

### DESCRIPTION OF REFERENCE NUMERALS

1: insulation-coated soft magnetic metal powder
**2:** soft magnetic metal particle
**3:** insulation layer
10: dust core
11, 21, 31, 41, 51, 61, 81, 91: dust core
100, 20, 30: inductor (electronic element)
13, 23, 33, 43, 45, 53, 63, 65, 83, 93: coil
40: noise filter (electronic element)
50: reactor (electronic element)
60: transformer (electronic element)
70: noise filter (electronic device)
80: motor (electric motor)
90: generator

## Claims

1. An insulation-coated soft magnetic metal powder comprising:
soft magnetic metal particles having an average equivalent circle diameter of 10 µm to 100 µm; and
an insulation layer formed on a surface of each of the soft magnetic metal particles, wherein
the insulation layer contains an oxide including Zr element, and
when the oxide is measured at 25°C by XRD,
a strongest peak is a cubic peak or a tetragonal peak, and
an intensity of a monoclinic peak is not greater than one-tenth of an intensity of the strongest peak.

2. The insulation-coated soft magnetic metal powder according to claim 1, wherein the oxide is stabilized zirconia or partially stabilized zirconia.

3. A dust core including the insulation-coated soft magnetic metal powder according to claim 1 or 2.

4. An electronic element comprising the dust core according to claim 3.

5. The electronic element according to claim 4, comprising the dust core and a coil.

6. An electronic device comprising the electronic element according to claim 4.

7. An electric motor comprising the dust core according to claim 3.

8. A generator comprising the dust core according to claim 3.
